# FASCICULE DE BREVET EUROPEEN

(11) **EP 4 458 314 B1**
(45) Date de publication et mention de la délivrance du brevet: **22.07.2026**
(21) Numéro de dépôt: 24174207.1
(22) Date de dépôt: 03.05.2024
(51) Int. Cl.: A61C 7/00, A61C 7/08

(54) **PROCÉDÉ DE FABRICATION D'UNE GOUTTIÈRE DENTAIRE CORRECTIVE PERSONNALISÉE POUR LE TRAITEMENT SIMULTANÉ DES PROBLÉMATIQUES FONCTIONNELLES, ORTHODONTIQUES ET ORTHOPÉDIQUES D'UN PATIENT, SYSTÈME INFORMATIQUE, PROGRAMME D'ORDINATEUR ET SUPPORT DE DONNÉES COMPORTANT CE PROGRAMME POUR LA RÉALISATION DE CE PROCÉDÉ**
VERFAHREN ZUR HERSTELLUNG EINER INDIVIDUELL ANGEPASSTEN ZAHNKORREKTURSCHIENE FÜR DIE GLEICHZEITIGE BEHANDLUNG VON FUNKTIONALEN, KIEFERORTHOPÄDISCHEN UND ORTHOPÄDISCHEN PROBLEMEN EINES PATIENTEN, COMPUTERSYSTEM, COMPUTERPROGRAMM UND DATENTRÄGER MIT DIESEM PROGRAMM ZUR DURCHFÜHRUNG DIESES VERFAHRENS
METHOD FOR PRODUCING A CUSTOM CORRECTIVE DENTAL SPLINT FOR THE SIMULTANEOUS TREATMENT OF FUNCTIONAL, ORTHODONTIC AND ORTHOPEDIC PROBLEMS OF A PATIENT, COMPUTER SYSTEM, COMPUTER PROGRAM, AND MEMORY SUPPORT STORING THIS PROGRAM FOR THE EXECUTION OF THIS METHOD

(30) Priorité: 05.05.2023 FR 2304529
(43) Date de publication de la demande: 06.11.2024
(73) Titulaire: Triosmile, 33000 Bordeaux (FR)
(72) Inventeur: TRILLAUD, Antoine, 33000 BORDEAUX (FR); GIPCH, Joël, 75008 PARIS (FR)
(74) Mandataire: Aquinov

(56) Documents cités:
- US-A1- 2020 197 131
- US-A1- 2021 353 386

## Description

### Domaine technique.

L'invention se rapporte au domaine technique de l'orthodontie et de l'orthopédie dentofaciale, et en particulier à la conception et à la fabrication de gouttières dentaires correctives personnalisées.

L'invention a pour objet un procédé de fabrication d'une gouttière dentaire personnalisée mis en œuvre par ordinateur, et conçue sur la base conjointe d'analyses fonctionnelles, orthodontiques et orthopédiques du patient et adapté à l'âge.

Est également divulguée, sans faire partie de la présente invention, une gouttière dentaire corrective obtenue par le procédé de fabrication précité.

### Etat de la technique.

Actuellement, les dispositifs de correction en orthodontie et orthopédie dentofaciale sont principalement basés sur l'utilisation d'aligneurs, avec ou sans dispositifs complémentaires, ou d'appareils rigides amovibles ou fixes personnalisés pouvant être combinés à des gouttières souples standard. D'autres options incluent des appareils orthodontiques et orthopédiques fixes ou mobiles tels que des élastiques intermaxillaires, des attelles palatines, des fils orthodontiques, des vis d'ancrage temporaires et des bagues. Ces dispositifs standardisés exigent une personnalisation manuelle par le praticien pour adapter le dispositif aux exigences spécifiques et à la morphologie maxillo-faciale et bucco-dentaire individuelle du patient.

Dans le cas particulier des appareils dentaires amovibles, le professionnel dentaire procède à la fabrication de ces derniers de manière quasi-artisanale, en assemblant différents éléments sur une base produite typiquement en résine et retravaillée pour l'adapter à l'anatomie du patient, de sorte à obtenir à la fin l'appareil dentaire correctif personnalisé pour le patient.

Cette démarche est fortement chronophage et laborieuse et nécessite le plus souvent des interventions régulières du professionnel dentaire qui doit procéder à des réajustements et des contrôles réguliers du dispositif au cours du traitement. De plus, en cas de perte du dispositif correcteur, le professionnel dentaire doit en fabriquer un à nouveau, avec le surcoût de fabrication associée au remplacement du dispositif correcteur.

Du fait de la technicité et du temps nécessaire pour produire de tels appareils correctifs le prix de vente peut s'avérer relativement élevé et devenir de fait un produit peu accessible pour le patient. De plus, un inconvénient majeur est que les patients doivent porter ces appareils de manière continue pendant de longues périodes. En outre, les dispositifs orthodontiques actuels ne prennent pas en compte l'intégralité des besoins fonctionnels, orthopédiques et orthodontiques du patient, ce qui peut conduire à des résultats insatisfaisants, nécessitant des traitements complémentaires ou mener à une impossibilité irréparable d'obtenir un résultat correctif réussi chez un patient, phénomène portant couramment le nom de « perte de chance ».

Un problème majeur des appareils correctifs existants est que ceux-ci ne sont pas conçus pour traiter de manière intégrale les problématiques mixtes de nature fonctionnelle, orthopédique et orthodontique. La raison principale de ce manque est la difficulté d'intégration conjointe des résultats d'analyses fonctionnelles, orthopédiques et orthodontique de l'anatomie du patient sur un même support capable de définir des stratégies thérapeutiques progressives et efficaces.

À l'heure actuelle, il n'existe pas de solution permettant de corriger en même temps l'ensemble des dysfonctionnements dentaires, osseux, musculaires et fonctionnels ; et notamment en matière du guidage de la croissance dentaire et d'ajustement de la position des mâchoires. Cette absence de dispositif répondant intégralement aux besoins du patient conduit très souvent à des résultats insatisfaisants ou incomplets et impliquant des durées de traitement prolongées et/ou engendrant des récidives des problèmes orthodontiques et/ou des pertes de chance.

En outre, les gouttières dentaires génériques sont standardisées et les appareils orthodontiques fixes peuvent provoquer un inconfort notable chez les patients, notamment en raison de la pression exercée sur les dents et les gencives, ainsi que des difficultés rencontrées pour assurer une hygiène bucco-dentaire adéquate. En effet, le nettoyage et l'entretien de ces dispositifs peuvent s'avérer complexes, augmentant par ce biais les risques d'infections ou de complications dentaires.

Aujourd'hui, il n'existe pas de procédé de fabrication automatisé d'une gouttière dentaire corrective intégrant simultanément, et ce dès sa conception, les éléments correctifs nécessaires selon les besoins du patient et établis sur la base conjointe d'analyses fonctionnelles, orthodontiques et orthopédiques des structures anatomiques dudit patient. Du fait de la complexité et de la diversité des besoins individuels des patients en matière de traitement dentofacial, les dispositifs actuels ne sont pas conçus pour répondre aux problèmes spécifiques du patient en sa globalité. Ainsi, en absence d'une solution répondant à l'ensemble de ces inconvénients, les praticiens sont contraints d'utiliser plusieurs dispositifs ou techniques pour traiter un même patient, ce qui peut augmenter le temps et le coût du traitement. De plus, le recours à une pluralité de dispositifs pour traiter les différentes problématiques du patient peut entraîner des complications et des coûts supplémentaires, car les dispositifs pourraient interagir de manière imprévue ou ne pas être parfaitement compatibles entre eux.

En outre, l'absence d'intégration globale des aspects fonctionnels, orthodontiques et orthopédiques par les appareils actuels peut conduire à des résultats insatisfaisants, du fait de la non prise en compte de l'ensemble des besoins du patient. Pouvant notamment mener à des problèmes de récidive, où les problèmes orthodontiques ou orthopédiques réapparaissent après la fin du traitement, ce qui nécessite des interventions supplémentaires ou une perte de chance.

US 2021/353386 A1 divulgue un procédé de fabrication d'une gouttière dentaire corrective permettant de corriger le système bucco-dentaire d'un patient, le procédé étant mis en œuvre par un système informatique, mais ne précise pas les données employées, ni que le procédé implique la détermination de facteurs diagnostiques fonctionnels, orthopédiques et orthodontiques.

Il existe donc un besoin pour un procédé de fabrication d'une gouttière dentaire corrective personnalisée, adaptée à la morphologie du patient et répondant à l'ensemble des problématiques fonctionnelles, orthopédiques et orthodontiques du patient ; permettant ainsi d'optimiser l'efficacité et la qualité de la gouttière dentaire corrective, tout en réduisant les complications potentielles et en améliorant l'expérience globale du patient.

L'invention se place donc dans ce contexte et vise à résoudre l'ensemble des inconvénients précités. Ainsi, l'invention cherche à proposer une méthode de fabrication d'une gouttière dentaire corrective personnalisée pour un patient ; ladite gouttière étant conçue à partir d'un modèle 3D défini de sorte à intégrer de manière conjointe les résultats d'un ensemble d'analyses fonctionnelles, orthodontiques et orthopédiques du système bucco-dentaire dudit patient selon son l'âge; et de sorte à ce que la gouttière corrige, simultanément, les problématiques du patient sur les aspects fonctionnels, orthopédiques et orthodontiques.

L'invention a pour objet un procédé de fabrication d'une gouttière dentaire corrective personnalisée permettant de corriger le système bucco-dentaire d'un patient, le procédé étant mis en œuvre par un système informatique, caractérisé en ce qu'il comporte les étapes suivantes :
- étape de réception par le système informatique d'au moins un modèle 3D, dit modèle initial, du système bucco-dentaire du patient ;
- étape de détermination de facteurs diagnostiques fonctionnels, orthopédiques et orthodontiques du système bucco-dentaire du patient ;
- étape de détermination d'un ensemble de paramètres correctifs du système bucco-dentaire du patient à partir desdits facteurs diagnostiques ;
- étape de génération d'un modèle 3D, dit modèle correctif, à partir du modèle initial, desdits paramètres correctifs et desdits facteurs diagnostiques ;
- étape de génération d'au moins un modèle 3D d'une gouttière corrective personnalisée permettant de transformer le modèle initial en le modèle correctif ;
- étape de fabrication d'une gouttière corrective à partir dudit modèle 3D d'une gouttière dentaire personnalisée.

Dans un mode de réalisation de l'invention, le système informatique comporte une unité de calcul, une mémoire de stockage et un terminal numérique, ledit terminal numérique permettant de commander ladite unité de calcul au moyen d'une interface graphique dudit terminal numérique et d'accéder à ladite mémoire de stockage de sorte à pouvoir accéder, transmettre et modifier son contenu.

Avantageusement, ladite mémoire de stockage étant apte à stocker une pluralité d'images 2D et/ou 3D d'une ou plusieurs parties anatomiques d'un patient, notamment du système bucco-dentaire dudit patient, notamment telles que des radiographies panoramiques, des radiographies intra-orales, des photographies intra et extra orales.

Dans un mode de réalisation de l'invention, le système informatique est un système informatique embarqué, notamment sous la forme d'une tablette numérique ou d'un ordinateur, apte à recevoir et transmettre des données au moyen d'un réseau de communication filaire et/ou non filaire et/ou satellitaire.

Dans un mode de réalisation alternatif de l'invention, ledit terminal numérique du système informatique est un terminal numérique distant, apte à communiquer et échanger des données avec l'unité de calcul et avec la mémoire de stockage.

Avantageusement, l'unité de calcul est apte à exécuter une pluralité d'algorithmes de rendu, de modification et de visualisation de modèles numériques 3D, notamment de modèles numériques anatomiques et de modèles numériques de gouttières dentaires correctives.

Avantageusement encore, ladite unité de calcul est apte à exécuter une pluralité d'algorithmes de d'analyse, de gestion et de traitement d'images 2D et/ou 3D et/ou d'une combinaison d'images 2D et 3D.

Si on le souhaite, le système informatique peut comporter une deuxième mémoire de stockage distante, accessible via un réseau de communication ; ladite deuxième mémoire de stockage étant apte à stocker une pluralité d'images 2D et/ou 3D d'une ou plusieurs parties anatomiques d'un patient, notamment du système bucco-dentaire dudit patient.

Avantageusement, le système informatique comporte une interface graphique permettant de visualiser des images 2D et/ou 3D ainsi que permettant le rendu d'un modèle 3D de l'anatomie dentofaciale du patient, notamment du système bucco-dentaire du patient et/ou d'une d'un modèle 3D d'une gouttière dentaire.

Si on le souhaite, ladite interface graphique pourra être une interface graphique tactile et ledit système informatique être entièrement embarqué sur une tablette numérique.

Avantageusement, ladite interface graphique pourra être conçue pour afficher du contenu prévu pour être visualisé à l'aide de lunettes 3D.

Avantageusement encore, ladite interface graphique pourra être conçue pour afficher du contenu graphique au moyen d'un casque de réalité virtuel, notamment compatible avec des effets de visualisation volumétrique 3D.

Avantageusement, l'étape de détermination de facteurs diagnostiques fonctionnels, orthopédiques et orthodontiques du système bucco-dentaire du patient permet d'établir un bilan intégral de la situation clinique du patient, notamment en tenant compte de l'âge et du stade de croissance dudit patient, et d'établir les liens de dépendance entre les différents facteurs diagnostiques.

En fonction de l'âge du patient, les capacités de traitement peuvent être plus ou moins limitées. Le traitement par la gouttière corrective personnalisée intègre dès sa conception cette information, permettant ainsi d'assurer un guidage de croissance adapté aux différentes phases de développement dentaire et osseux, notamment en considérant l'éruption des dents permanentes et les modifications du squelette facial. Grâce à cette approche personnalisée, la gouttière offre un traitement plus efficace et adapté aux besoins évolutifs du patient tout au long de sa croissance. Cette capacité à s'adapter aux différentes étapes de développement permet d'obtenir de meilleurs résultats en termes d'alignement dentaire et de correction des problèmes orthopédiques et fonctionnels.

De préférence, l'estimation des facteurs diagnostiques fonctionnels, orthopédiques et orthodontiques est réalisée automatiquement par l'unité de calcul du système informatique. Ladite unité de calcul utilise des algorithmes spécifiques pour analyser les données recueillies à partir des images 2D et/ou 3D dentofaciales du patient, ainsi que les résultats des tests fonctionnels établis par un professionnel de santé ou par analyse directe d'une vidéo du patient. En utilisant ces données, l'unité de calcul est capable d'estimer avec précision les besoins spécifiques du patient en matière de traitement dentaire, et de générer un modèle 3D de la gouttière corrective personnalisée qui tient compte de ces besoins.

En outre, l'utilisation d'une unité de calcul pour l'estimation des facteurs diagnostiques présente plusieurs avantages par rapport à une évaluation manuelle. Tout d'abord, l'unité de calcul est capable de traiter de grandes quantités de données en un temps minimal, ce qui permet une conception de la gouttière corrective plus rapide et plus précise. En outre, l'unité de calcul est en mesure d'effectuer des analyses complexes pour déterminer les besoins spécifiques du patient en matière de traitement dentaire, et de générer un modèle 3D qui intègre tous ces besoins de manière cohérente et efficace. Enfin, l'utilisation d'une unité de calcul pour l'estimation des facteurs diagnostiques permet de standardiser la méthode de conception de la gouttière corrective, assurant ainsi une qualité et une précision constantes pour chaque patient traité.

Dans un mode de réalisation de l'invention, l'étape de détermination de facteurs diagnostiques fonctionnels est réalisée automatiquement par l'unité de calcul à partir de vidéos de l'anatomie du patient.

Sont notamment des facteurs diagnostiques fonctionnels les positions ou postures linguales, la ventilation, la mastication, la déglutition, l'élocution ou la phonation et la salivation du patient, le tonus musculaire orofacial, la capacité de fermeture labiale, également nommée compétence labiale, la coordination des mouvements de la langue, la présence de malpositions labio-linguales, la présence de douleurs articulaires et/ou musculaires, la présence de malformations tissulaires et musculosquelettiques.

Avantageusement, la détermination des facteurs diagnostiques fonctionnels pourra être basée notamment sur le volume du couloir aéro-pharyngé, la position linguale au sein de la cavité buccale, la position relative de l'os hyoïde, la présence de lordose ou cyphose de la colonne vertébrale, le volume des amygdales et végétations, présence d'une déviation de la cloison nasale, du volume des sinus frontaux ou maxillaires ainsi que la quantité de cellules mastoïdiennes présentes.

De préférence, les facteurs diagnostiques fonctionnels tels que les positions ou postures linguales, la ventilation, la mastication, la déglutition, l'élocution ou la phonation et la salivation du patient peuvent être mesurés à l'aide de tests fonctionnels spécifiques. Par exemple, pour évaluer la mastication, le patient peut être invité à mâcher différents aliments de textures et de consistances différentes, tandis que pour évaluer la déglutition, le patient peut être invité à boire ou à avaler différentes quantités d'eau ou de nourriture. La ventilation peut être évaluée au travers d'exercices respiratoires du patient.

Pour mesurer ces facteurs diagnostiques fonctionnels de manière automatique, l'unité de calcul utilise des algorithmes spécifiques pour analyser les résultats de tests fonctionnels enregistrés à l'aide d'équipements tels que des capteurs de pression, des appareils photographiques ou des caméras notamment haute vitesse, des spiromètres, des électrodes et des microphones. En utilisant ces données, l'unité de calcul est capable d'estimer avec précision la fonction de la mâchoire et les problèmes fonctionnels, tels que les troubles de la posture linguale, de la ventilation, de la mastication, de la déglutition, de l'élocution ou de la salivation.

Selon un exemple de réalisation, l'étape de détermination de facteurs diagnostiques fonctionnels pourra comporter une sous-étape d'acquisition d'une vidéo du patient au moyen d'une caméra, une sous-étape de reconnaissance faciale du patient dans ladite vidéo, une sous-étape de détection de points de repère faciaux prédéterminés dans le visage du patient, notamment localisés au niveau de la mâchoire, et une classification des mouvements desdits points de repère faciaux pour déterminer lesdits facteurs diagnostiques fonctionnels, notamment lors d'un évènement de type ventilation, mastication, déglutition, phonation ou salivation. Ces différentes étapes de reconnaissance, détection et classification pourront notamment être mis en œuvre par un ou plusieurs algorithmes d'apprentissage automatique, par exemple du type réseau de neurones convolutif ou CNN.

De façon alternative ou cumulative, l'étape de détermination de facteurs diagnostiques fonctionnels pourra comporter une étape d'acquisition d'un signal échographique lingual mis en œuvre par un système d'échographie lingual, notamment augmenté, équipé d'une sonde échographique ; et/ou une étape d'acquisition d'un signal de type électromyogramme, ou EMG, mis en œuvre par un système d'électromyographie de surface équipé d'une ou plusieurs électrodes ; et/ou une étape d'acquisition d'un signal par un système d'électropalatographie équipé d'une ou plusieurs électrodes. Ces différentes techniques permettent également d'obtenir des signaux traduisant des troubles de la posture linguale, de la ventilation, de la mastication, de la déglutition, de la phonation ou de la salivation, qui peuvent ensuite être traités par un algorithme pour déterminer lesdites facteurs diagnostiques fonctionnels.

En outre, l'unité de calcul peut également analyser des données issues d'un système d'imagerie médicale, comme des images radiographiques 2D ou 3D ou des images tomodensitométriques ou encore des images céphalométriques de profil ou de face, voire des photographies du patient de face ou de profil, pour évaluer la structure osseuse et les tissus mous de la mâchoire et du crâne, ce qui permet de détecter les anomalies fonctionnelles et les troubles de la mâchoire. En combinant ces différentes analyses, l'unité de calcul est capable de réaliser une évaluation complète et précise des facteurs diagnostiques fonctionnels du patient.

Sont notamment des facteurs diagnostiques orthopédiques, les relations géométriques et structurelles entre les arcades dentaires supérieure et inférieure, notamment au regard de la base du crane, , , la coordination des mouvements de la mâchoire, , , la position de repos de la mandibule, , présence de déséquilibres squelettiques .

Avantageusement, la détermination des facteurs diagnostiques orthopédiques pourra être basée, notamment, sur une pluralité de critères parmi l'orientation et l'inclinaison du plan palatin et du plan maxillaire dans le sens transversal, notamment par rapport à un plan de référence pouvant être fixé sur la base du crâne, un ensemble selon les classes de Ballard, des mesures de déviation de la mandibule et/ou du maxillaire par rapport à la ligne médiane, des angles mandibulaires, de la position relative de la mandibule, de la position et de l'orientation du plan occlusal par rapport à un plan de référence, la présence d'endognathie ou exo-gnathie.

Sont notamment des facteurs diagnostiques orthodontiques l'emplacement et l'alignement des dents, l'inclinaison et la rotation des dents, la taille des espaces interdentaires, la présence d'encombrements ou des chevauchements dentaires, la présence d'endoalvéolies ou exo-alvéolies, l'absence de dents, l'équilibre occlusal et les anomalies de de forme et de taille des dents.

Avantageusement, la détermination des facteurs diagnostiques orthodontiques pourra être basée, notamment sur l'alignement des dents, la présence de diastèmes, une mesure de l'encombrement dentaire, une mesure des rotations dentaires, , une mesure du surplomb et/ou de béance, l'analyse de la courbe de Spee, la mesure de la largeur des arcades dentaires, l'évaluation des relations sagittales entre les arcades, les classes d'Angle, la détection d'éventuels problèmes transversaux et l'évaluation de l'inclinaison des incisives.

Dans un mode de réalisation, les facteurs diagnostiques orthopédiques et/ou les facteurs diagnostiques orthodontiques pourront être déterminés par une analyse d'une image ou d'une vidéo, pouvant être issue d'un système d'imagerie médical ou d'un appareil photographique, montrant le crâne du patient de face et/ou de profil, ou montrant le visage du patient ou montrant l'intérieur de la bouche du patient.

Le cas échéant, la détermination des facteurs diagnostiques orthopédiques et/ou orthodontiques pourra comporter une étape de détection de points de référence faciaux, crâniens et/ou dentaires prédéterminés, et une étape de mesure de caractéristiques géométriques telles que des distances entre des couples de points de référence donnés, comme une hauteur nez-menton, et/ou des angles entre des lignes définies par des couples de points de référence donnés, comme une ligne du sourire ou l'inclinaison des dentes, et/ou des rapports de distance, notamment intra-arcarde ou inter-arcade. Ces mesures de caractéristiques peuvent ensuite être traités par un algorithme pour déterminer lesdites facteurs diagnostiques orthopédiques et/ou orthodontiques. Ces différentes étapes de détection et de mesure pourront notamment être mis en œuvre par un ou plusieurs algorithmes d'apprentissage automatique, par exemple du type réseau de neurones convolutif ou CNN.

Dans un mode de réalisation de l'invention, alternatif ou cumulatif, l'étape de détermination des facteurs orthodontiques comprend notamment la prise en compte de l'évolution dentaire chez le patient, ainsi que des effets d'augmentation de volume de la gencive due aux sacs péricoronaires associés à ladite évolution dentaire. Avantageusement, cette approche permet de concevoir une gouttière qui prend en considération l'émergence de nouvelles dents et les possibles augmentations de volume de la gencive. Ainsi, la gouttière est conçue de manière à laisser suffisamment d'espace dans un logement prévu pour accueillir une nouvelle dent, tout en tenant compte des changements de volume de la gencive. Cette anticipation des besoins futurs assure une meilleure adaptation de la gouttière aux changements dentaires du patient, améliorant ainsi l'efficacité et le confort du traitement orthodontique.

Si on le souhaite, le système informatique utilisé pour la conception de la gouttière corrective personnalisée est également apte à procéder à des analyses supplémentaires, en plus des analyses automatiques effectuées par l'unité de calcul. Ces analyses supplémentaires peuvent être réalisées par un professionnel dentaire, tel qu'un orthodontiste ou un dentiste spécialisé.

Par exemple, un professionnel dentaire peut réaliser une analyse de la plaque dentaire, de la gingivite, et d'éventuelles caries pour déterminer le niveau de santé bucco-dentaire du patient. Il peut également procéder à une évaluation des fonctions et de la relation entre la mâchoire supérieure et la mâchoire inférieure, afin de compléter les besoins spécifiques du patient en matière de correction orthopédique, orthodontique et fonctionnelle.

De préférence, ladite étape de détermination de facteurs diagnostiques fonctionnels, orthopédiques et orthodontiques du système bucco-dentaire du patient comporte :
i. la détermination de facteurs diagnostiques fonctionnels relatifs aux postures linguales, à la ventilation, la mastication, la déglutition, l'élocution et la salivation du patient, au tonus musculaire orofacial, à la compétence labiale, à la coordination des mouvements de la langue, à la présence de malpositions labio-linguales, à la présence de douleurs articulaires et/ou musculaires, et à la présence de malformations tissulaires et musculosquelettiques;
ii. la détermination de facteurs diagnostiques orthopédiques relatifs aux relations géométriques et structurelles entre les arcades dentaires supérieure et inférieure, à la coordination des mouvements de la mâchoire, à la position de repos de la mandibule et à la présence de déséquilibres squelettiques ;
iii. la détermination de facteurs diagnostiques orthodontiques relatifs à l'emplacement et l'alignement des dents, à l'inclinaison et la rotation des dents, à la taille des espaces interdentaires, à la présence d'encombrements ou des chevauchements dentaires, à la présence d'endo-alvéolies ou exo-alvéolies, à l'absence de dents l'équilibre occlusal et à la présence d'anomalies de de forme et de taille des dents.

Une fois ces analyses supplémentaires réalisées, les résultats peuvent être intégrés dans le système informatique pour affiner davantage la conception de la gouttière corrective personnalisée. De cette manière, le système informatique offre une solution complète et flexible pour la conception de la gouttière corrective, qui peut être adaptée aux besoins spécifiques de chaque patient en fonction de ses facteurs diagnostiques fonctionnels, orthopédiques et orthodontiques.

Avantageusement, l'étape de détermination d'un ensemble de paramètres correctifs du système bucco-dentaire du patient à partir des facteurs diagnostiques déterminés permet d'adresser en même temps l'ensemble des problématiques fonctionnelles, orthopédiques et orthodontiques du patient.

Si on le souhaite, chaque paramètre correctif pourra comporter un indice numérique indiquant la temporalité à laquelle ledit paramètre correctif devra être pris en compte pour la fabrication de la gouttière.

Avantageusement, l'étape de génération d'un modèle 3D correctif s'effectue à partir des paramètres correctifs et des facteurs diagnostiques préalablement déterminés. Cette combinaison d'éléments permet d'adresser la totalité des problématiques et de définir ledit modèle 3D correctif, représentant un objectif idéal pour le système bucco-dentaire du patient.

Avantageusement encore, des paramètres tels que l'âge du patient, l'âge dentaire du patient, le stade de croissance du patient, la présence de malformations morphologiques innées ou acquises, ou encore la présence de maladies génétiques peuvent être prises en considération dans le processus de détermination dudit modèle 3D.

Avantageusement, lorsque l'unité de calcul identifie la nécessité de recourir à une pluralité de gouttières dentaires correctives pour transformer le modèle 3D initial en le modèle 3D correctif, l'unité de calcul génère une succession de modèles 3D intermédiaires, en même nombre que le nombre de gouttières dentaires correctives de sorte que le dernier modèle généré corresponde audit modèle 3D correctif et de sorte que chaque modèle intermédiaire définisse un modèle correctif intermédiaire.

Dans un mode alternatif de réalisation, le modèle 3D peut être utilisé pour générer un moule de la gouttière corrective, qui est également considéré comme un négatif de la gouttière. Ce moule, ou négatif, représente la forme complémentaire à la gouttière corrective désirée. Il est utilisé pour créer un moule dans lequel le matériau biocompatible sera introduit pour former la gouttière corrective.

Avantageusement, la création d'un moule à partir du modèle 3D permet d'obtenir des gouttières sur mesure avec une grande précision, en respectant les dimensions et les détails spécifiques de la denture du patient. Cette méthode offre une flexibilité dans la production de gouttières correctives adaptées aux besoins individuels des patients.

En pratique, le choix d'utiliser un modèle 3D pour générer un moule de gouttière, ou un négatif de gouttière, dépendra des exigences spécifiques du traitement, des matériaux utilisés et des préférences du praticien. Leur mise en œuvre permet d'optimiser le processus de fabrication en fonction des contraintes techniques et des objectifs thérapeutiques souhaités.

Avantageusement, l'étape de fabrication d'une gouttière dentaire corrective à partir dudit modèle 3D permet d'obtenir une gouttière dentaire dont la forme est conçue pour répondre à l'ensemble des facteurs diagnostiques fonctionnels, orthopédiques et orthodontiques préalablement identifiés.

Avantageusement encore, lorsque l'unité de calcul identifie la nécessité pour réaliser le traitement de recourir à une pluralité de gouttières dentaires correctives pour transformer le modèle 3D initial en le modèle 3D correctif, l'étape de fabrication génère autant des gouttières dentaires correctives que des modèles 3D intermédiaires, de sorte que chaque gouttière dentaire corrective prenne en compte au moins une partie des paramètres correctifs déterminés préalablement et de sorte que les éléments correctifs présent sur l'une quelconque des gouttières soit déterminé en fonction de l'indice de temporalité associé à chacun desdits paramètres correctifs.

Dans la présente invention, on entend par « modèle 3D du système bucco-dentaire d'un patient », une représentation numérique tridimensionnelle de l'ensemble de dents, des gencives, des structures osseuses et tissulaires sous-jacentes de la cavité buccale du patient, obtenue à partir de données de numérisation issues notamment d'un scanner intra-oral, d'une photographie, d'une imagerie par résonnance magnétique ou encore par une imagerie par tomodensitométrie ou par une combinaison quelconques de ces techniques.

Dans la présente invention, on entend par « système bucco-dentaire » d'un patient, l'ensemble complexe de structures qui composent la cavité buccale et la denture dudit patient ; incluant notamment :
a) les tissus mous tels que les gencives, la langue et les muqueuses buccales recouvrant les parois internes de la bouche ;
b) la base osseuse, notamment, les maxillaires supérieur et inférieur, les alvéoles dentaires et le palais osseux ; et
c) les dents et leurs différentes parties comme les racines, la dentine et la pulpe dentaire.

Dans la présente invention, on entend par « facteurs diagnostiques » un ensemble de conditions anatomiques du patient reconnues comme étant des dysfonctionnements fonctionnels, orthodontiques et orthopédiques.

Les facteurs diagnostiques servant de base pour la détermination des paramètres correctifs nécessaires du système bucco-dentaire du patient, ils sont déterminés à partir de l'anatomie dentofaciale, des structures musculaires et squelettiques du patient et de l'âge, et plus particulièrement de sa denture, ainsi que à partir des besoins individuels et des traitements appropriés pour la conception de la gouttière dentaire corrective personnalisée, servant alors de base pour la détermination des paramètres correctifs nécessaires du système bucco-dentaire du patient.

Dans un mode de réalisation cumulatif de l'invention, l'étape de réception d'un modèle 3D du système bucco-dentaire de patient est précédée d'une étape de fourniture d'au moins une image dentofaciale du patient et d'une étape de génération d'un modèle 3D du système bucco-dentaire du patient à partir de ladite image dentofaciale.

Avantageusement, l'image dentofaciale pourra notamment être obtenue par des techniques d'imagerie telles que la radiographie panoramique, le scanner à cônes, l'imagerie par résonance magnétique, la tomographie volumique numérisée, la photogrammétrie 3D ou toute combinaison de deux ou plusieurs desdites techniques d'imagerie.

En procédant ainsi, le système informatique permet de générer, à partir de l'image dentofaciale fournie, un modèle 3D du système bucco-dentaire du patient en vue de l'évaluation diagnostic de la situation initiale du patient au moyen de la détermination des facteurs diagnostics fonctionnels, orthopédiques et orthodontiques.

Avantageusement, l'étape de génération d'un modèle 3D du système bucco-dentaire du patient à partir de l'image dentofaciale fournie pourra comporter le recours à des algorithmes de reconstruction géométrique tridimensionnelle de structures à partir d'images bidimensionnelles, et notamment des algorithmes de reconstruction volumétrique de maillages ; ainsi que des algorithmes de post-traitement permettant de corriger des erreurs des maillages 3D et/ou d'améliorer la résolution par élimination d'artefacts, lissage des surfaces et/ou par réduction du nombre d'éléments constitutifs du maillage.

Dans un mode de réalisation cumulatif de l'invention, la au moins une image dentofaciale est obtenue à partir d'empreintes dentaires ou d'images tridimensionnelles du système bucco-dentaire du patient.

En procédant ainsi, le recours à des empreintes dentaires et/ou des images tridimensionnelles du système bucco-dentaire du patient permettent de générer un modèle 3D du système bucco-dentaire du patient avec une grande fidélité et par ce biais d'augmenter la résolution finale du modèle, permettant ainsi de capturer des détails fins du système bucco-dentaire du patient qui pourraient ne pas être pris en compte si le modèle 3D était généré uniquement à partir d'images bidimensionnelles.

Dans un mode de réalisation cumulatif de l'invention, l'étape de génération d'au moins un modèle 3D d'une gouttière corrective personnalisée comporte la génération d'une séquence de modèles 3D, établis sur l'évolution espérée de la morphologie du patient au cours du traitement, et permettant de transformer progressivement le modèle initial en le modèle correctif ; et en ce qu'il comporte une séquence d'étapes de fabrication d'une gouttière corrective à partir de chacun des modèles 3D de ladite séquence de modèles 3D.

Avantageusement, la génération d'une séquence de modèles 3D associée avec ladite séquence d'étapes de fabrication d'une gouttière corrective permet de corriger progressivement les défauts fonctionnels, orthopédiques et orthodontiques tels qu'identifiés dans l'étape de détermination de facteurs diagnostiques ; et d'assurer la modification progressive de l'anatomie dentaire et maxillo-faciale du patient de sorte à améliorer la vitesse et l'efficacité du traitement tout en minimisant l'inconfort du patient. De plus, cela permet de tenir compte des progrès espérés au cours du traitement permettant ainsi de réagencer certains éléments de la gouttière, notamment des éléments correctifs initiaux, qui pourraient ne plus être nécessaires à un stade ultérieur du traitement ou alors devant être introduits à la suite d'une modification préalable de l'anatomie du patient. Par exemple, un élément de rééducation linguale peut être prévu sur la première gouttière corrective mais supprimé sur les gouttières suivantes ; similairement, un élément de guidage de la croissance dentaire ne peut être intégré à la gouttière qu'à la suite d'une expansion palatine venant élargir l'arcade dentaire et le palais, conditionnant par ce biais la présence dudit élément de guidage dans la gouttière à une étape postérieure.

Avantageusement encore, en comparaison avec les aligneurs traditionnels, la gouttière corrective personnalisée développée grâce à cette invention permet de réduire le nombre de gouttières nécessaires dans la séquence de traitement. Grâce à la personnalisation poussée et à la prise en compte des facteurs orthodontiques, fonctionnels et orthopédiques, ces gouttières sont conçues pour offrir un traitement plus efficace et ciblé. Ainsi, les patients peuvent bénéficier d'une progression plus rapide vers l'alignement dentaire souhaité, ce qui diminue le nombre total de gouttières requises au cours du traitement. Cela se traduit par un traitement plus rapide, des coûts réduits et un meilleur confort pour le patient.

Dans un mode de réalisation de l'invention, alternatif ou cumulatif, la gouttière corrective est fabriquée à partir d'un matériau élastique.

Avantageusement, l'utilisation d'un matériau élastique offre un confort accru du patient et maximise l'adaptation de la gouttière à l'anatomie du patient.

Dans un autre mode de réalisation de l'invention, toujours alternatif ou cumulatif, la gouttière corrective est également fabriquée à partir d'un matériau biocompatible et résistant.

Avantageusement, le choix d'un matériau biocompatible assure une bonne tolérance par l'organisme du patient, limitant les risques d'allergie et d'irritation. La résistance du matériau permet quant à elle d'assurer la durabilité et l'efficacité de la gouttière tout au long du traitement orthodontique.

Avantageusement, l'utilisation d'un matériau biocompatible garantit que la gouttière est bien tolérée par les tissus buccaux du patient, réduisant ainsi le risque de réactions allergiques ou d'irritations et améliorant le confort du patient et la sûreté du traitement. En outre, la résistance accrue du matériau biocompatible permet d'assurer une durabilité de la gouttière dentaire corrective dans le temps, permettant à ladite gouttière de résister à l'usure quotidienne et de préserver sa forme et sa fonction malgré les efforts mécaniques subis lors du portage de la gouttière par le patient.

Si on le souhaite la gouttière corrective pourra notamment être fabriquée, partiellement ou intégralement, en un matériau biocompatible tel que des élastomères, l'éthylèneacétate de vinyle, le polyéthylène téréphtalate glycolisé, le polyuréthane thermoplastique, les résines pour impression 3D, le silicone, le polyétheréthercétone, ou toute combinaison obtenue à partir desdits matériaux.

Dans un mode de réalisation de l'invention, la gouttière corrective est fabriquée à partir d'un matériau coloré ou apte à être teint. Avantageusement, cette coloration permet de personnaliser la gouttière au goût du patient, encourageant par ce biais le portage de la gouttière corrective et améliorer la réussite du traitement.

Si on le souhaite, la gouttière corrective pourra être fabriquée en un matériau translucide ou présenter des zones sensiblement translucides, en couleur ou entièrement transparentes.

En variante, la gouttière dentaire corrective pourra être fabriquée en un matériau opaque ou présenter des zones sensiblement opaques, en couleur ou aptes à être colorées.

Dans un mode de réalisation de l'invention, alternatif ou cumulatif, la gouttière corrective comporte des éléments décoratifs tels que des motifs de couleurs, des motifs de texture ou encore des motifs de relief ou de gravure.

Avantageusement, la présence de tels éléments décoratifs permet une personnalisation complète pour le patient, de sorte à l'inciter à un portage adéquat en vue de la réussite du traitement ; par exemple, le marquage en relief du nom du patient ou encore d'un élément décoratif en relief tel qu'un animal ou un symbole choisi par le patient.

Avantageusement encore, l'élément de marquage en relief pourra être un code QR, qui pourrait contenir des informations spécifiques au traitement, telles que les coordonnées du praticien, les instructions pour l'utilisation et l'entretien de la gouttière, ou encore des informations de suivi et de contrôle du traitement. Ce code QR permettrait au patient, ainsi qu'aux professionnels de santé impliqués dans le suivi du traitement, d'accéder facilement aux informations pertinentes, améliorant ainsi la communication et le suivi du traitement. De plus, l'utilisation d'un code QR offre une solution discrète pour inclure des informations importantes sans compromettre l'esthétique de la gouttière.

Dans un mode de réalisation cumulatif de l'invention, l'étape de fabrication de la gouttière est mise en œuvre par un procédé de fabrication additive de la gouttière à partir du modèle 3D de la gouttière corrective personnalisée.

Avantageusement, la fabrication de la gouttière corrective par un procédé de fabrication additive permet d'assurer une adéquation optimale de celle-ci à l'anatomie du patient, notamment en s'ajustant avec exactitude aux caractéristiques propres du système bucco-dentaire du patient. De plus, le recours à un procédé de fabrication additive permet de réduire le temps et le coût de fabrication de la gouttière corrective.

Dans un mode de réalisation cumulatif de l'invention, le procédé de fabrication additive est un procédé d'impression 3D en résine et/ou en silicone.

Avantageusement, l'impression 3D en résine et/ou en silicone permettent, du fait de leurs propriétés mécaniques, de produire des gouttières dentaires correctives de forme complexe tout en offrant une bonne durabilité au cours du temps, résultant en un traitement plus confortable, plus esthétique et mieux adapté aux exigences individuelles du patient et facilitant le travail du professionnel dentaire.

Avantageusement encore, en raison de leur nature élastique et souple, les gouttières en silicone offrent une expérience de portage particulièrement douce et agréable pour le patient, réduisant ainsi les irritations et inconforts potentiels et améliorant l'adhérence du patient au traitement.

Dans un mode de réalisation cumulatif de l'invention, l'étape de fabrication de la gouttière est mise en œuvre par un procédé de moulage en résine et/ou en silicone de la gouttière à partir du modèle 3D de la gouttière corrective personnalisé.

Avantageusement, le procédé de moulage permet de reproduire fidèlement les détails complexes du modèle 3D, assurant ainsi un ajustement optimal de la gouttière corrective au système bucco-dentaire du patient. De plus, le procédé de moulage est également plus rapide et moins coûteux en comparaison des méthodes classiques de fabrication de gouttières dentaires telles que l'assemblage manuel de structures métalliques et de structures à base de résine par le professionnel dentaire.

Dans un mode de réalisation de l'invention, alternatif ou cumulatif, l'étape de génération d'au moins un modèle 3D d'une gouttière corrective personnalisée comporte l'addition audit modèle 3D d'éléments correctifs pouvant être ultérieurement supprimés du modèle 3D.

Avantageusement, l'addition d'éléments correctifs pouvant être ultérieurement supprimés dudit modèle 3D permet une correcte planification des étapes du traitement, facilitant en même temps l'ajustement de la gouttière corrective en fonction de l'évolution espérée du système bucco-dentaire du patient.

Sont notamment des éléments correctifs pouvant être ultérieurement supprimés du modèle 3D de la gouttière corrective personnalisée : des cales dentaires pour créer de l'espace entre les dents, des boutons orthodontiques pour faciliter la traction des dents, des élastiques pour corriger les malocclusions, des mini-vis pour faciliter le mouvement dentaire, ou encore des éléments pour corriger la position des dents et améliorer l'occlusion dentaire. L'ajout de ces éléments correctifs permet de prévoir les différentes étapes du traitement dentaire et de planifier l'ajustement de la gouttière corrective en fonction de l'évolution attendue du système bucco-dentaire du patient. De cette manière, l'invention offre un traitement dentaire personnalisé et optimisé pour chaque patient, tout en simplifiant le processus de fabrication et d'ajustement de la gouttière corrective.

Dans un mode de réalisation cumulatif de l'invention, l'étape de génération d'au moins un modèle 3D d'une gouttière corrective personnalisée comporte l'addition audit modèle 3D d'éléments de rétention permettant d'améliorer l'efficacité de la gouttière.

Son notamment des éléments de rétention, des attaches, des crochets, des éléments de retenue sur les côtés de la gouttière, des éléments de fixation en forme d'ailes, ou encore des éléments de rétention spéciaux tels que des boutons en résine composite ou des attaches en métal. Avantageusement, les éléments de rétention sont conçus pour assurer une meilleure transmission des forces correctrices induites par la gouttière, contribuant ainsi à améliorer l'efficacité globale du traitement. Les éléments de rétention sont ajoutés de manière personnalisée pour chaque patient, en fonction de la morphologie de sa denture et des besoins spécifiques de son traitement.

Dans un mode de réalisation cumulatif de l'invention, l'étape de génération d'au moins un modèle 3D d'une gouttière corrective personnalisée comporte l'addition audit modèle 3D d'éléments destinés à corriger des malpositions dentaires et/ou osseuses.

Avantageusement, les éléments destinés à corriger des malpositions dentaires et/ou osseuses permettent d'adapter la gouttière corrective de manière précise et individualisée en fonction des besoins spécifiques du patient en même temps que les risques de complications dus à une gouttière mal ajustée sont minimisés.

Sont notamment des éléments de correction des malpositions dentaires et/ou osseuses les bagues orthodontiques, aligneurs dentaires, les fils orthodontiques, les dilatateurs, les bielles de Herbst, les surélévations molaires, les pistes de planas, les élastiques intermaxillaires, les ressorts, les disjoncteurs palatins, les plaques palatines, notamment des plaques à vérin, à papillon, de Hawley, Stephenson et de Fouet, avec ou sans aillerons.

Dans un mode de réalisation de l'invention, alternatif ou cumulatif, l'étape de génération d'au moins un modèle 3D d'une gouttière corrective personnalisée comporte l'addition d'éléments d'accroche d'éléments auxiliaires, tels que des élastiques ou des ressorts.

Avantageusement, l'incorporation desdits éléments d'accroche d'éléments auxiliaires sur le modèle 3D de la gouttière corrective permet de tenir compte directement des dimensions et contraintes mécaniques desdits éléments d'accroche et/ou de simuler sur ordinateur leur impact sur la cavité buccale du patient.

Dans un mode de réalisation de l'invention, alternatif ou cumulatif, la gouttière dentaire corrective est conçue géométriquement pour rééduquer les muscles et les structures de soutien de la mâchoire du patient.

Avantageusement, le design géométrique de la gouttière peut être choisi de sorte à améliorer la fonction de la mâchoire et la position des dents, permettant de faciliter l'hygiène bucco-dentaire à long terme en créant un environnement buccal plus sain.

Avantageusement encore, la gouttière corrective personnalisée permet d'améliorer la qualité de vie du patient, en particulier en facilitant une meilleure respiration et en ayant un impact positif sur la croissance et le développement du futur adulte. En corrigeant les malpositions dentaires et les problèmes d'occlusion, la gouttière peut aider à rétablir un alignement dentaire et une mâchoire saine, ce qui contribue à une respiration plus aisée et à une meilleure fonction des voies respiratoires supérieures.

De plus, en corrigeant les problèmes orthodontiques chez les enfants et les adolescents, la gouttière personnalisée peut avoir un effet bénéfique sur la croissance et le développement facial, prévenant ainsi les problèmes futurs liés à la mâchoire, aux dents et aux muscles faciaux. Cela peut conduire à une meilleure esthétique faciale et à une meilleure fonction masticatoire, contribuant ainsi à une meilleure qualité de vie et à une meilleure confiance en soi chez le futur adulte.

Dans un mode de réalisation de l'invention, alternatif ou cumulatif, la gouttière pourra comporter des éléments de mesure du temps de portage par le patient, notamment des capteurs intégrés tels que des accéléromètres, des capteurs de température et/ou des capteurs de pression et/ou des marqueurs de couleur ou des témoins d'usure.

Avantageusement, ces capteurs de portage permettent de détecter le moment où la gouttière est insérée dans la bouche du patient et enregistreront la durée pendant laquelle elle est portée. De plus, des indicateurs de port, tels que des marqueurs de couleur ou des témoins d'usure, pourront être utilisés pour aider le patient et le professionnel dentaire à suivre l'évolution du traitement vérifier la conformité du port de la gouttière.

Avantageusement, la gouttière pourra comporter des éléments magnétiques, dirigés de sorte à exercer une force selon une direction déterminée et avec une intensité préalablement choisie, permettant ainsi une action ciblée et précise sur les parties anatomiques souhaitées. Lesdits éléments magnétiques pourront être des aimants, notamment fabriqués en néodyme, qui offrent une forte force magnétique malgré leur petite taille. Ces aimants pourront être disposés à l'intérieur de la gouttière, dans des emplacements spécifiques correspondant aux zones de la dentition à traiter, ou bien fixés sur des accessoires dentaires complémentaires, tels que des bagues orthodontiques, permettant ainsi d'améliorer l'efficacité de la gouttière.

L'invention décrit aussi, sans la revendiquer, une gouttière dentaire corrective personnalisée permettant de corriger le système bucco-dentaire d'un patient et fabriquée au moyen du procédé de fabrication précédemment décrit.

Avantageusement, en optant pour une gouttière dentaire corrective plutôt qu'un dispositif dentaire fixe, le patient bénéficie d'un confort supérieur sans pour autant sacrifier l'efficacité du traitement. En raison de sa grande efficacité, la gouttière dentaire peut permettre un portage réduit par rapport aux appareils dentaires fixes traditionnels, ce qui contribue à une meilleure expérience globale pour le patient tout en garantissant un traitement orthodontique réussi. Ainsi, la gouttière dentaire corrective est portée essentiellement pendant la nuit et pendant quelques heures, notamment deux heures, pendant la journée.

Si on le souhaite, des éléments de marquage graphique, tels que des dessins, des logos, des signes, des symboles ou encore du texte peuvent être intégrés sur la gouttière dentaire corrective grâce au procédé de fabrication utilisé.

Avantageusement, les éléments de marquage graphique permettent une personnalisation avancée, contribuant d'une part à insérer notamment la marque du fabricant et/ou de rajouter des graphiques décoratifs en vue d'offrir une motivation accrue au portage de la gouttière dentaire corrective par le patient, notamment chez les enfants.

L'invention a également pour objet un système informatique de fabrication d'une gouttière dentaires corrective personnalisée, comportant une unité de calcul agencée pour mettre en œuvre le procédé selon l'invention.

De préférence, le système informatique comporte un système de fabrication additive de gouttières dentaires, notamment une imprimante 3D.

L'invention a également pour objet un programme d'ordinateur, enregistré sur un support de données, et comprenant un code de programme qui est conçu pour, lorsqu'il est exécuté par un ordinateur, mettre en œuvre les étapes de réception, de détermination des facteurs diagnostiques fonctionnels, orthopédiques et orthodontiques, de déterminations de l'ensemble des paramètres correctifs et de génération du modèle 3D correctif du procédé de fabrication d'une gouttière corrective personnalisée précédemment décrit.

L'invention a également pour objet un support de données sur lequel est enregistré le programme d'ordinateur comprenant un code de programme qui est conçu pour, lorsqu'il est exécuté par un ordinateur selon un mode de réalisation de l'invention précédemment décrit.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, un schéma-bloc d'un procédé de fabrication d'une gouttière dentaire corrective selon un mode de réalisation de l'invention.
[Fig. 2] représente, schématiquement et partiellement, un système informatique de fabrication de gouttières dentaires correctives personnalisées et relié à un système de fabrication additive de gouttières dentaires selon un mode de réalisation de l'invention.
[Fig. 3] représente, schématiquement et partiellement, une interface graphique d'analyse d'images 2D et/ou 3D et d'analyse, génération et visualisation de modèles 3D du système bucco-dentaire d'un patient selon un mode de réalisation de l'invention.
[Fig. 4] représente, schématiquement et partiellement, un modèle 3D initial et un modèle 3D correctif du système bucco-dentaire d'un patient.
[Fig. 5] représente, schématiquement et partiellement, un modèle 3D de gouttière dentaire corrective personnalisée fabriquée à partir d'un modèle 3D correctif du système bucco-dentaire d'un patient selon un mode de réalisation de l'invention.
[Fig. 6] représente, schématiquement et partiellement, une gouttière dentaire corrective personnalisée fabriquée à partir du procédé de fabrication de gouttières dentaires selon un mode de réalisation de l'invention.
Dans la description qui suit, les éléments identiques, par structure ou par fonction, apparaissant sur différentes figures conservent, sauf précision contraire, les mêmes références.

### Description des modes de réalisation.

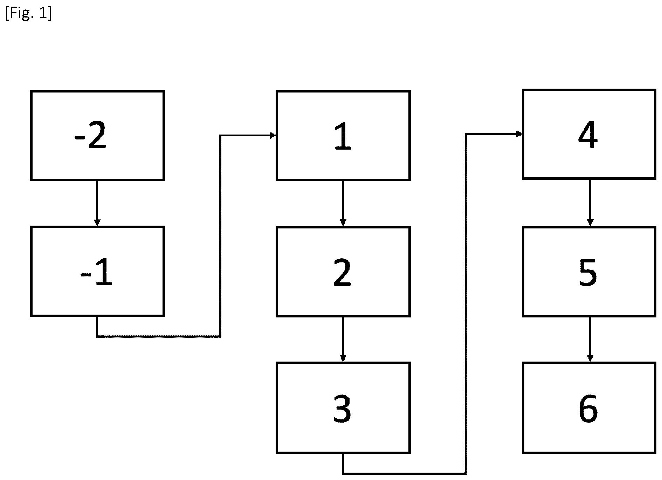

On a représenté en [Fig. 1], un procédé de fabrication d'une gouttière dentaire corrective personnalisée 30 permettant de corriger le système bucco-dentaire d'un patient, le procédé étant mis en œuvre par un système informatique 10.

Le procédé comprends une première étape -2 de fourniture d'une première image dentofaciale 19, en l'espèce une radiographie, et d'une deuxième image tridimensionnelle du système bucco-dentaire du patient (non représentée).

Le procédé comprends ensuite une étape -1 de génération d'un modèle 3D initial du système bucco-dentaire du patient 20 à partir de la radiographie 19 et de l'image tridimensionnelle du système bucco-dentaire du patient.

Le procédé comprend ensuite une étape 1 de réception par le système informatique du modèle 3D du système bucco-dentaire du patient 20.

Le procédé comprend ensuite une étape 2 de détermination de facteurs diagnostiques 101 fonctionnels, orthopédiques et orthodontiques du système bucco-dentaire du patient. La détermination desdits facteurs est opérée par l'unité de calcul 11 du système informatique 10 et est basée sur un ensemble de mesures et de calculs sur des paramètres anatomiques issues du modèle 3D initial 20 et des analyses effectuées sur les images radiographique 19 et tridimensionnelle du système bucco-dentaire du patient.

Le procédé comprend ensuite une étape 3 de détermination d'un ensemble de paramètres correctifs du système bucco-dentaire du patient à partir des facteurs diagnostiques 101 préalablement déterminés.

Le procédé comprend ensuite une étape 4 de génération d'un modèle 3D correctif 21 à partir du modèle initial 20, des paramètres correctifs et des facteurs diagnostiques.

Le procédé comprend ensuite une étape 5 de génération d'un modèle 3D d'une gouttière dentaire corrective personnalisée 22 permettant de transformer le modèle initial 20 en le modèle correctif 21

Le procédé comprend une dernière étape 6 de fabrication d'une gouttière corrective 30 à partir du modèle 3D d'une gouttière dentaire corrective personnalisée 22.

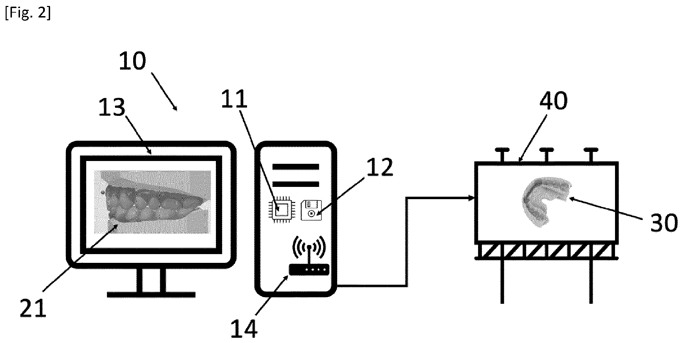

On a représenté en [Fig. 2] un système informatique de fabrication de gouttières dentaires correctives personnalisées 30 et relié à un système 40 de fabrication additive de gouttières dentaires. Le système informatique comporte une unité de calcul 11, une mémoire de stockage (non représentée) contenant une radiographie 19, une image tridimensionnelle du système bucco-dentaire du patient et d'un modèle 3D du système bucco-dentaire d'un patient. Le système informatique 10 comporte également un terminal numérique permettant de commander l'unité de calcul 11 au moyen d'une interface graphique 13 et permettant d'accéder à la mémoire de stockage de sorte à pouvoir dupliquer, supprimer, transmettre et modifier le contenu de ladite mémoire de stockage.

Le système informatique 10 comporte un dispositif de communication 14 connecté au réseau internet et permettant de piloter le système de fabrication de gouttières dentaires 40. Le système de fabrication de gouttières dentaires 40 est un système d'impression 3D de gouttières dentaires 30 en silicone biocompatible et de couleur sensiblement similaire à celle des dents du patient.

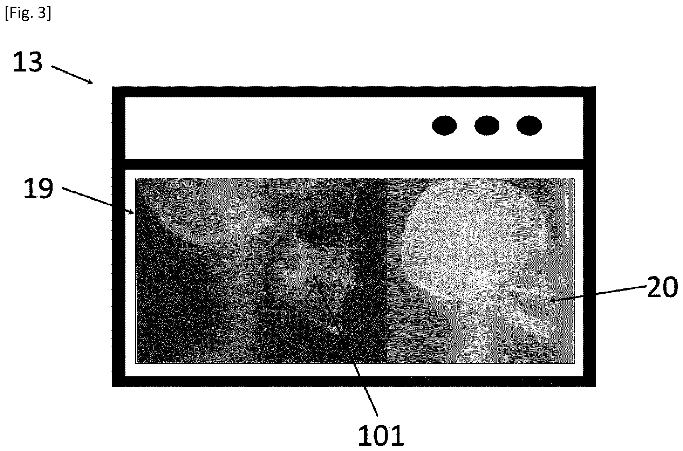

On a représenté en [Fig. 3] le détail de l'interface graphique 13 à un moment de son utilisation. On retrouve la visualisation de l'image radiographique 19 du patient ainsi qu'un ensemble de lignes et angles de mesure 101 permettant de déterminer les facteurs diagnostiques fonctionnels, orthopédiques et orthodontiques du patient.

L'interface graphique 13 présente également une deuxième fenêtre de visualisation où une visualisation dynamique du modèle 3D du système bucco-dentaire du patient 20 est superposée avec l'image radiographique 19.

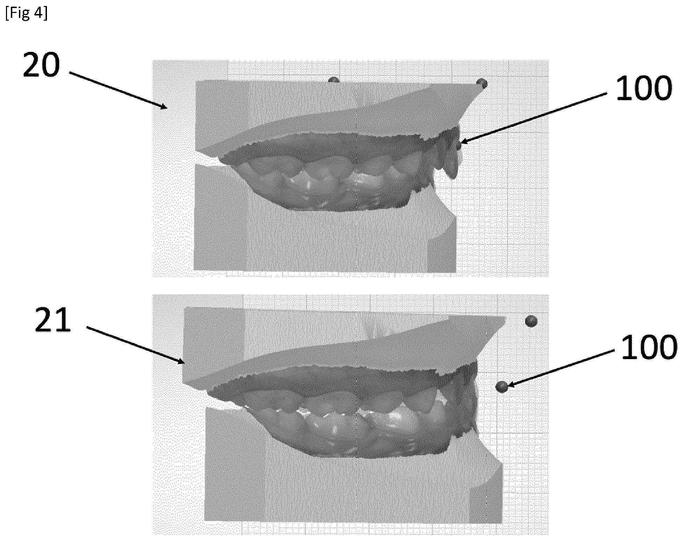

On a représenté en [Fig. 4] le modèle 3D initial 20 du système bucco-dentaire du patient et le modèle 3D correctif 21 du patient. Le point 100 un point de référence, servant de soutien visuel et permettant de distinguer les changements dans le système bucco-dentaire du patient entre les deux modèles. Sur le modèle initial 20 on distingue un désalignement de la mâchoire supérieure par rapport à la mâchoire inférieure qui a été automatiquement corrigé sur le modèle correctif 21.

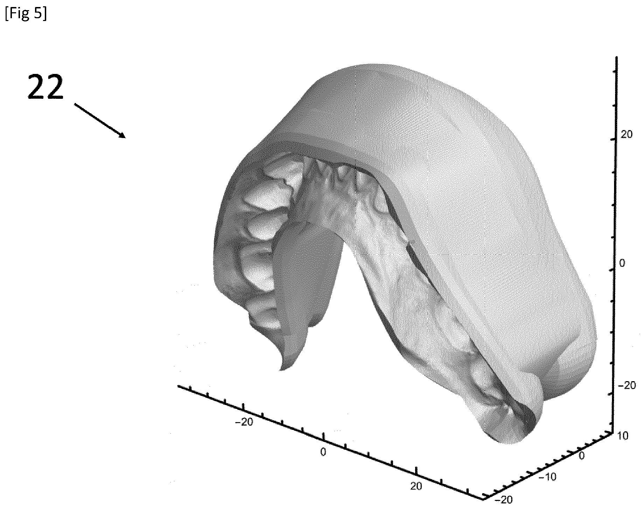

On a représenté en [Fig. 5] un modèle 3D d'une gouttière dentaire corrective personnalisée 22 obtenue par le procédé de fabrication et permettant de transformer le modèle 3D initial 20 en le modèle 3D correctif 21. La gouttière dentaire corrective personnalisée 22 est de couleur sensiblement similaire à celle des dents du patient et est fabriquée en silicone biocompatible par une méthode d'impression 3D en silicone.

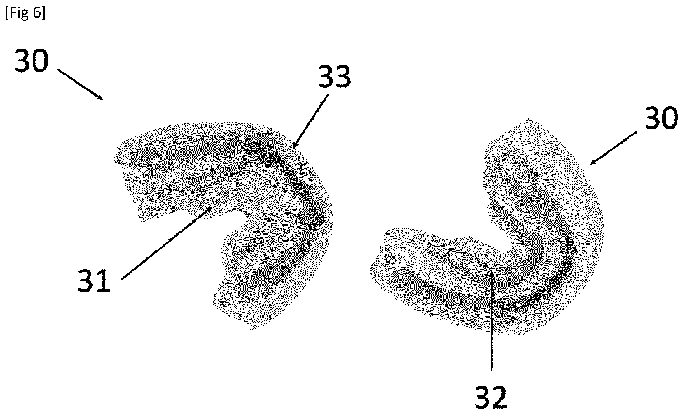

On a représenté en [Fig. 6] une gouttière dentaire corrective 30 sous deux angles de vue différents. Lors de l'étape 3 de détermination des paramètres correctifs de la denture du système bucco-dentaire du patient, il a été déterminé qu'un paramètre correctif de la position de la langue devait être introduit. En tenant compte des différents types d'attentes en fonction de l'âge dentaire, tels que les besoins spécifiques liés aux dents de lait et aux futures dents définitives, des ajustements appropriés ont été apportés à la conception de la gouttière. À partir de ces informations, un élément correctif 31 a été conçu, conduisant ainsi à la présence tant sur le modèle 3D de la gouttière 22 que sur la gouttière corrective personnalisée 30 dudit élément correctif.

La gouttière corrective 30 est fabriquée en un matériau opaque de couleur gris clair.

La gouttière corrective 30 comporte également un élément graphique 32 de personnalisation, correspondant au nom du patient.

La description qui précède explique clairement comment l'invention permet d'atteindre les objectifs qu'elle s'est fixée, à savoir proposer une méthode de fabrication d'une gouttière dentaire corrective personnalisée pour un patient qui intègre conjointement les résultats d'un ensemble d'analyses automatisées fonctionnelles, orthodontiques et orthopédiques du système bucco-dentaire de ce patient, afin de corriger simultanément les problématiques sur les aspects fonctionnels, orthopédiques et orthodontiques. Cette méthode repose sur la création d'un modèle 3D spécifique pour chaque patient, qui permet de concevoir une gouttière parfaitement adaptée selon son âge à sa morphologie dentaire et à ses besoins orthodontiques et orthopédiques.

En tout état de cause, l'invention ne saurait se limiter aux modes de réalisation spécifiquement décrits dans ce document, et s'étend en particulier à tous moyens équivalents et à toute combinaison techniquement opérante de ces moyens tels que décrits dans les revendications qui suivent. On pourra en particulier envisager d'autres modes de réalisation de la gouttière dentaire corrective en utilisant des matériaux différents ou en utilisant des techniques de fabrications différentes de celles préalablement décrites. On pourra notamment envisager l'utilisation de techniques de modélisation 3D plus avancées ou de technologies d'impression 3D plus récentes.

## Revendications

1. Procédé de fabrication d'une gouttière dentaire corrective personnalisée (30) permettant de corriger le système bucco-dentaire d'un patient, le procédé étant mis en œuvre par un système informatique (10), le procédé comportant les étapes suivantes :
a. étape (1) de réception par le système informatique d'au moins un modèle 3D (20), dit modèle initial, du système bucco-dentaire du patient.
b. étape (2) de détermination de facteurs diagnostiques fonctionnels, orthopédiques et orthodontiques du système bucco-dentaire du patient ;
c. étape (3) de détermination d'un ensemble de paramètres correctifs du système bucco-dentaire du patient à partir desdits facteurs diagnostiques ;
d. étape (4) de génération d'un modèle 3D (21), dit modèle correctif, à partir du modèle initial (20), desdits paramètres correctifs et desdits facteurs diagnostiques ;
e. étape (5) de génération d'au moins un modèle 3D (22) d'une gouttière corrective personnalisée permettant de transformer le modèle initial (20) en le modèle correctif (21) ;
f. étape (6) de fabrication d'une gouttière corrective (30) à partir dudit modèle 3D d'une gouttière dentaire personnalisée ;
**caractérisé en ce que** ladite étape de détermination de facteurs diagnostiques fonctionnels, orthopédiques et orthodontiques du système bucco-dentaire du patient comporte :
i. la détermination de facteurs diagnostiques fonctionnels relatifs aux postures linguales, à la ventilation, la mastication, la déglutition, l'élocution et la salivation du patient, au tonus musculaire orofacial, à la compétence labiale, à la coordination des mouvements de la langue, à la présence de malpositions labio-linguales, à la présence de douleurs articulaires et/ou musculaires, et à la présence de malformations tissulaires et musculosquelettiques;
ii. la détermination de facteurs diagnostiques orthopédiques relatifs aux relations géométriques et structurelles entre les arcades dentaires supérieure et inférieure, à la coordination des mouvements de la mâchoire, à la position de repos de la mandibule et à la présence de déséquilibres squelettiques ;
iii. la détermination de facteurs diagnostiques orthodontiques relatifs à l'emplacement et l'alignement des dents, à l'inclinaison et la rotation des dents, à la taille des espaces interdentaires, à la présence d'encombrements ou des chevauchements dentaires, à la présence d'endo-alvéolies ou exo-alvéolies, à l'absence de dents l'équilibre occlusal et à la présence d'anomalies de de forme et de taille des dents.

2. Procédé selon la revendication 1, **caractérisé en ce que** l'étape de réception d'un modèle 3D (20) du système bucco-dentaire de patient est précédé d'une étape (-2) de fourniture d'au moins une image dentofaciale (19) du patient et d'une étape (-1) de génération d'un modèle 3D (20) du système bucco-dentaire du patient à partir de ladite image dentofaciale (19).

3. Procédé selon la revendication 2, **caractérisé en ce que** ladite au moins une image dentofaciale (19) est obtenue à partir d'empreintes dentaires ou d'images tridimensionnelles du système bucco-dentaire du patient.

4. Procédé selon l'une des revendications 1 à 3, **caractérisé en ce que** l'étape de génération d'au moins un modèle 3D d'une gouttière corrective personnalisée (22) comporte la génération d'une séquence de modèles 3D permettant de transformer progressivement le modèle initial (20) en le modèle correctif (21) ; et **en ce qu'**il comporte une séquence d'étapes de fabrication d'une gouttière corrective à partir de chacun des modèles 3D de ladite séquence de modèles 3D.

5. Procédé selon l'une des revendications 1 à 4, **caractérisé en ce que** l'étape 6 de fabrication de la gouttière dentaire corrective (30) est mise en œuvre par un procédé de fabrication additive de la gouttière à partir du modèle 3D (22) de la gouttière corrective personnalisée.

6. Procédé selon l'une des revendications 1 à 5, **caractérisé en ce que** l'étape 6 de fabrication de la gouttière est mise en œuvre par un procédé de moulage en résine et/ou en silicone de la gouttière à partir du modèle 3D (22) de la gouttière dentaire corrective personnalisé.

7. Procédé selon l'une des revendications 1 à 6, **caractérisé en ce que** l'étape de génération d'au moins un modèle 3D (22) d'une gouttière dentaire corrective personnalisée comporte l'addition audit modèle 3D d'éléments destinés à corriger des malpositions dentaires et/ou osseuses.

8. Système informatique de fabrication d'une gouttière dentaire corrective personnalisée, comportant une unité de calcul et un système de fabrication additive de gouttières dentaires, agencés pour mettre en œuvre le procédé selon l'une des revendications 1 à 7.

9. Produit programme d'ordinateur, enregistré sur un support de données (12), et comprenant un code de programme qui est conçu pour, lorsqu'il est exécuté par système informatique selon la revendication 8, mettre en œuvre le procédé selon l'une des revendications 1 à 7.

10. Support de données (12) sur lequel est enregistré le programme d'ordinateur selon la revendication précédente.

## Patentansprüche

1. Verfahren für die Herstellung einer personalisierten korrigierenden Zahnschiene (30) für die Korrektur des bukkalen Zahnsystems eines Patienten, wobei das Verfahren durch ein Computersystem (10) durchgeführt wird, das Verfahren umfassend die folgenden Schritte:
a. Schritt (1) des Empfangens von mindestens einem 3D-Modell (20), dem Ausgangsmodell, des bukkalen Zahnsystems des Patienten durch das Computersystem.
b. Schritt (2) des Bestimmens funktioneller, orthopädischer und kieferorthopädischer diagnostischer Faktoren des bukkalen Zahnsystems des Patienten;
c. Schritt (3) des Bestimmens eines Satzes von Korrekturparametern des bukkalen Zahnsystems des Patienten anhand der diagnostischen Faktoren;
d. Schritt (4) des Erzeugens eines 3D-Modells (21), des Korrekturmodells, anhand des Ausgangsmodells (20) der Korrekturparameter und der diagnostischen Faktoren;
e. Schritt (5) des Erzeugens mindestens eines 3D-Modells (22) einer personalisierten Korrekturschiene zum Transformieren des Ausgangsmodells (20) in das Korrekturmodell (21);
f. Schritt (6) des Herstellens einer Korrekturschiene (30) anhand des 3D-Modells einer personalisierten Zahnschiene;
**dadurch gekennzeichnet, dass** der Schritt des Bestimmens funktioneller, orthopädischer und kieferorthopädischer diagnostischer Faktoren des bukkalen Zahnsystems des Patienten umfasst:
i. Bestimmen funktioneller diagnostischer Faktoren relativ zu lingualen Stellungen, Atmung, Kauen, Schlucken, Sprechen und Speichelfluss des Patienten auf den orofazialen Muskeltonus, auf die labiale Kompetenz, auf die Koordination der Zungenbewegungen, auf das Vorliegen von labiolingualen Fehlstellungen, auf das Vorliegen von Gelenk- und/oder Muskelschmerzen und auf das Vorliegen von Gewebe- und muskuloskelettalen Fehlbildungen;
ii. Bestimmen orthopädischer Diagnosefaktoren relativ zu den geometrischen und strukturellen Beziehungen zwischen dem oberen und dem unteren Zahnbogen, der Koordination der Kieferbewegungen, der Ruheposition des Unterkiefers und dem Vorhandensein skelettaler Ungleichgewichte;
iii. Bestimmen kieferorthopädischer Diagnosefaktoren relativ zu der Position und der Ausrichtung der Zähne, der Neigung und der Rotation der Zähne, der Größe der Interdentalräume, dem Vorhandensein von Engständen oder Zahnüberlappungen, dem Vorhandensein von Endoalveolien oder Exoalveolien, dem Fehlen von Zähnen, dem okklusalen Gleichgewicht und dem Vorhandensein von Anomalien der Form und Größe der Zähne.

2. Verfahren nach Anspruch 1, **dadurch gekennzeichnet, dass** dem Schritt des Empfangens eines 3D-Modells (20) des bukkalen Zahnsystems des Patienten ein Schritt (-2) des Bereitstellens mindestens eines dentofazialen Bildes (19) des Patienten und ein Schritt (-1) des Erzeugens eines 3D-Modells (20) des bukkalen Zahnsystems des Patienten anhand des dentofazialen Bildes (19) vorausgehen.

3. Verfahren nach Anspruch 2, **dadurch gekennzeichnet, dass** das mindestens eine dentofaziale Bild (19) aus Zahnabdrücken oder dreidimensionalen Bildern des bukkalen Zahnsystems des Patienten erhalten wird.

4. Verfahren nach einem der Ansprüche 1 bis 3,
**dadurch gekennzeichnet, dass** der Schritt des Erzeugens mindestens eines 3D-Modells einer personalisierten Korrekturschiene (22) das Erzeugen einer Sequenz von 3D-Modellen umfasst, die es ermöglichen, das Ausgangsmodell (20) schrittweise in das Korrekturmodell (21) zu transformieren; **und dadurch, dass** es eine Sequenz von Schritten für die Herstellung einer Korrekturschiene anhand jedes der 3D-Modelle der Sequenz von 3D-Modellen umfasst.

5. Verfahren nach einem der Ansprüche 1 bis 4,
**dadurch gekennzeichnet, dass** der Schritt 6 des Herstellens der korrigierenden Zahnschiene (30) durch ein Verfahren für die additive Fertigung der Schiene anhand des 3D-Modells (22) der personalisierten korrigierenden Zahnschiene durchgeführt wird.

6. Verfahren nach einem der Ansprüche 1 bis 5,
**dadurch gekennzeichnet, dass** der Schritt 6 des Herstellens der Schiene durch ein Verfahren zum Formen der Schiene aus Harz und/oder aus Silikon anhand des 3D-Modells (22) der personalisierten korrigierenden Zahnschiene durchgeführt wird.

7. Verfahren nach einem der Ansprüche 1 bis 6,
**dadurch gekennzeichnet, dass** der Schritt des Erzeugens mindestens eines 3D-Modells (22) einer personalisierten korrigierenden Zahnschiene das Hinzufügen von Elementen zu dem 3D-Modell umfasst, die dazu bestimmt sind, Zahn- und/oder Knochenfehlstellungen zu korrigieren.

8. Computersystem für die Herstellung einer personalisierten korrigierenden Zahnschiene, umfassend eine Recheneinheit und ein System für die additive Fertigung von Zahnschienen, die dazu ausgestaltet sind, das Verfahren nach einem der Ansprüche 1 bis 7 durchzuführen.

9. Computerprogrammprodukt, das auf einem Datenträger (12) gespeichert ist und einen Programmcode umfasst, der dazu eingerichtet ist, bei Ausführung durch ein Computersystem nach Anspruch 8 das Verfahren nach einem der Ansprüche 1 bis 7 durchzuführen.

10. Datenträger (12), auf dem das Computerprogramm nach dem vorstehenden Anspruch gespeichert ist.

## Claims

1. A method for manufacturing a customized corrective dental aligner (30) for correcting a patient's oral system, the method being implemented by a computer system (10) and the method comprising the following steps:
a. a step (1) of receiving by the computer system at least one 3D model (20), referred to as the initial model, of the patient's oral system;
b. a step (2) of determining functional, orthopedic and orthodontic diagnostic factors of the patient's oral system;
c. a step (3) of determining a set of corrective parameters of the patient's oral system from said diagnostic factors;
d. a step (4) of generating a 3D model (21), referred to as a corrective model, from the initial model (20), said corrective parameters and said diagnostic factors;
e. a step (5) of generating at least one 3D model (22) of a customized corrective aligner, enabling the initial model (20) to be transformed into the corrective model (21);
f. a step (6) of manufacturing a corrective aligner (30) from said 3D model of a customized dental aligner;
**characterized in that** said step of determining functional, orthopedic and orthodontic diagnostic factors of the patient's oral system comprises:
i. determining functional diagnostic factors relating to the patient's lingual postures, ventilation, mastication, swallowing, speech and salivation, orofacial muscle tone, labial competence, coordination of tongue movements, presence of labiolingual malpositions, presence of joint and/or muscular pain, and presence of tissue and musculoskeletal malformations;
ii. determining orthopedic diagnostic factors relating to geometric and structural relationships between the upper and lower dental arches, coordination of jaw movements, resting position of the mandible and presence of skeletal imbalances;
iii. determining orthodontic diagnostic factors relating to tooth location and alignment, tooth inclination and rotation, interdental space size, the presence of crowding or of overlapping teeth, the presence of dental arch contractions or dental arch expansions, missing teeth, occlusal balance and presence of anomalies in tooth shape and size.

2. The method according to claim 1, **characterized in that** the step of receiving a 3D model (20) of the patient's oral system is preceded by a step (-2) of providing at least one dentofacial image (19) of the patient and a step (-1) of generating a 3D model (20) of the patient's oral system from said dentofacial image (19).

3. The method according to claim 2, **characterized in that** said at least one dentofacial image (19) is obtained from dental impressions or three-dimensional images of the patient's oral system.

4. The method according to one of claims 1 to 3, **characterized in that** the step of generating at least one 3D model (22) of a customized corrective aligner comprises generating a sequence of 3D models enabling the initial model (20) to be progressively transformed into the corrective model (21); **and in that** it comprises a sequence of steps for manufacturing a corrective aligner from each of the 3D models of said sequence of 3D models.

5. The method according to one of claims 1 to 4, **characterized in that** step 6 of manufacturing the corrective dental aligner (30) is implemented by an aligner additive manufacturing method from the 3D model (22) of the customized corrective aligner.

6. The method according to one of claims 1 to 5, **characterized in that** step 6 of manufacturing the aligner is implemented by a method for resin and/or silicone molding of the aligner from the 3D model (22) of the customized corrective dental aligner.

7. The method according to one of claims 1 to 6, **characterized in that** the step of generating at least one 3D model (22) of a customized corrective dental aligner involves adding elements designed to correct dental and/or bone malpositions to said 3D model.

8. A computer system for manufacturing a customized corrective dental aligner, comprising a computing unit and a dental aligner additive manufacturing system which are arranged to implement the method according to one of claims 1 to 7.

9. A computer program product saved on a data carrier (12) and comprising program code which is designed, when executed by a computer system according to claim 8, to implement the method according to one of claims 1 to 7.

10. A data carrier (12) on which the computer program according to the preceding claim is saved.
